# EUROPEAN PATENT APPLICATION

(11) **EP 4 553 740 A2**
(43) Date of publication of application: **14.05.2025**
(21) Application number: 25159733.2
(22) Date of filing: 27.06.2019
(51) Int. Cl.: G06Q 30/02

(54) **METHOD AND SYSTEM FOR REAL-TIME AUDIENCE CHARACTERISATION**

(30) Priority: 29.05.2019 EP 19177455
(62) Divisional of application: 19183025.6
(71) Applicant: DMI Digital Media Institute GmbH, 80539 Munich (DE)
(72) Inventor: Goldberg, Frank, 81667 Munich (DE); Nadia Abou-El-Ela, Munich 80538 (DE)
(74) Representative: Fleuchaus & Gallo Partnerschaft mbB

(57) **Abstract**

The invention refers to a method and a system for real-time audience characterisation. The system of the present invention comprises an event detector, an event counter, a controller and an output. The event detector is configured to automatically detecting one or more events associated with and arising from audience members or potential audience members in a proximity of a presentation device configured to present content and the event counter is configured to record or count the events in anonymous form. The controller is configured to generate one or more characteristics of the audience or potential audience of the presented content by processing the events or the number thereof according to empirical data pertaining to the one or more characteristics of the audience or potential audience. The output is configured to output the one or more characteristics of the audience or potential audience. The system may use event temporal coincidence detection and triangulation to determine the position of an audience or potential audience member.

## Description

### Field of the Invention

The present invention relates to a method and system for real-time audience characterisation, such as of target groups, of particular but by no means exclusive application in tracking an audience in public, especially in environments in which data protection provisions (e.g. GDPR and DSGVO) forbid collection of personalized data without consent.

### Background

It is known to conduct market media studies to determine the reach and performance of out-of-home (OoH), digital out-of-home (DOOH) or other outdoor advertising. These market media studies are used by media agencies for the planning of OoH and DOOH campaigns. In Germany, for example, the "Public & Private Screens" study provides a media currency for the German DOOH market.

Such advertising, however, is currently undergoing a major shift, where advertising content is played out in real-time to different target group segments (referred to as 'programmatic advertising'). Target group segments may be, for example, male, female, young or old audiences, heads of household or people with certain product interests. Real-time playout or presentation of advertising or other content benefits from real-time data on the target groups, that is, those to whom the advertising is directed. Various tracking technologies exist for capturing target group data in the environment of (digital) out-of-home advertising screens and posters.

In order to structure and standardize the tracking data used for (digital) out-of-home advertising, a 'tracking currency' has been developed for the (D)OOH market,. The tracking currency was developed in consultation with advertsing customers, (D)OOH advertising providers, technology providers and market research companies. The utility of this tracking currency arises from the fact that each tracking technology delivers different qualities and quantities of data. Thus, two different tracking technologies (e.g. Facetracking and Wi-Fi-Tracking) deliver different tracking values, even when deployed at the same time and location, owing to differences in the tracking methodology (e.g. tracking of eye contacts vs. tracking of smartphones). In addition, the same tracking technology (e.g. face tracking) from different manufacturers often delivers different tracking values at the same time and location, owing to different sensor qualities (giving rise to, for example, differences in resolution), different processing algorithms and different processing hardware performance.

However, media buyers (i.e. buyers of advertising space) need a reliable basis for campaign planning so that tracking data from different locations and different advertising screens (i.e. from different tracking technologies) is comparable. This concept of comparable performance values (reach and target group data) for the same category of advertising media (such as DOOH screens in different locations) is referred to as a 'media currency'. A media currency should exclude or compensate for differences in data collection and thus for distortions in the comparison of different tracking technologies.

One known Wi-Fi tracking technology records the MAC addresses of smartphones in the vicinity of a Wi-Fi tracking sensor (which generally comprises a standard Wi-Fi access point), so that-thanks to the prevalence of Wi-Fi-enabled devices-target groups can be detected or tracked when in the vicinity of a Wi-Fi tracking sensor installed next to or near DOOH advertising. The MAC address is a unique, manufacturer-assigned identifier for each internet-enabled device. However, the MAC addresses make smartphones individually recognizable, so the MAC address is considered personal data and hence subject to the provisions of the European General Data Protection Regulation (GDPR) and the German Basisc Data Protection Regulation (DSGVO).

These regulations stipulate that people (strictly speaking, their devices) captured by tracking technologies must be informed of the collection of their data and must be given the opportunity to object to collection of their data and that the data collected must be deleted if the affected people object. In many cases, however, this is practically impossible-especially with outdoor posters or large LED walls, such as on streets or in pedestrian zones.

Furthermore, many advertising media such as posters or digital screens and the associated tracking technology are located within, for example, airports or shopping centres and are operated by third party marketing and sales agencies rather than the site owners themselves. The tracking of persons or smartphones in the vicinity of the digital advertising space is therefore in the interest of these third party marketing and sales agencies, but not necessarily in the interest of the site owners, so it can be complicated or impossible for the third party marketing and sales agencies to inform any tracked individuals, if required to by such data protection provisions.

### Summary

According to a first aspect, the invention provides a method for real-time audience characterisation, the method comprising:
automatically detecting one or more events associated with and arising from audience members or potential audience members being in a proximity of a presentation device configured to present content (such as advertising, entertainment, news and/or infotainment, and may be-for example-visual content and/or audio content);
recording or counting the events in anonymous form;
generating one or more characteristics of the audience or potential audience of the presented content by processing the events or the number thereof according to empirical data (such as survey data, conducted by questioning and/or observation) pertaining to the one or more characteristics of the audience or potential audience; and
outputting the one or more characteristics of the audience or potential audience.

The empirical data may be stored in processed form, such that it can be multiplied by or divided into the number of recorded or counted events. The method may include normalizing the number of recorded or counted events according to the empirical data.

Audience or potential audience is referred to above, as it may not be possible to distinguish between people watching or listening to the presented content, and those apparently in a position to do so (hence 'potential' audience members) but disregarding the presented content or incapable of watching it or listening to it (perhaps owing to a sight or hearing problem).

The presentation device may comprise one or more displays, screens, speakers, and/or rollable or rotatable posters. Other controllable presentation devices are also suitable. However, the presentation device need not be controllable: it may comprise a static item or items of content, such as one or more posters. It may be a conventional or illuminated billboard.

The one or more characteristics may comprise essentially any characteristics that may be ascertained empirically, especially by survey(s) of the population from which the audience or potential audience is drawn. In an embodiment, therefore, the one or more characteristics comprise:
i) a size of the audience or potential audience (e.g. 350 individuals);
ii) sex of the audience or potential audience (e.g. 40% female, 60% male);
iii) age of the audience or potential audience (e.g. 35% under 25 years, 50% between 25 and 55 years, 15% over 55 years);
iv) household size of the audience or potential audience (e.g. 20% 1 or 2, 55% 3 or 4, years, 25% 5 or more);
v) income of the audience or potential audience (e.g. 30% €3 000 or less per month, 40% €3 000 to €6 000 per month, 20% €6 000 to €10 000 per month, 10% over €10 000 per month); and/or
vi) product interests of the audience or potential audience.

In an embodiment, the automatic detection of the one or more events comprises detecting with a wireless access point (WAP) Wi-Fi probe requests from Wi-Fi enabled devices in the vicinity of the presentation device. In an example, the WAP comprises a kernel configured to control the WAP not to record or read-out content of the probe requests.

The kernel may be configured to prompt the generation of a random or pseudo-random number or string in response to detection of a probe request.

In an example, the empirical data includes data that correlates number of probe requests with a size of the audience or potential audience of the presented content.

In another embodiment, automatically detecting the one or more events comprises detecting faces in the vicinity of the presentation device with a facetracking system. In an example, the empirical data includes data that correlates number of recognized faces with a size of the audience or potential audience of the presented content.

In another embodiment, automatically detecting the one or more events comprises employing one or more Bluetooth (trade mark) beacons installed in the vicinity of the advertising panel, and detection software (or app) configured to detect Bluetooth beacon signals and installed on smartphones of audience members or potential audience members, whereby the detection software responds to the Bluetooth beacons by transmitting an ID from the Bluetooth beacon signal to the system, thereby alerting the system of the proximity of the smartphone.

It should be noted that the system may include two or more all of these detection approaches (i.e. WAP, facetracking and Bluetooth), thereby increasing the accuracy of the results.

In another embodiment, the method includes controlling presentation of the content by the presentation device according to the one or more characteristics of the audience or potential audience.

In an embodiment, the method further comprises:
detecting a plurality of events with a plurality of wireless access points or Wi-Fi trackers, the events comprising Wi-Fi probe requests from at least one Wi-Fi enabled device in the vicinity of the wireless access points or Wi-Fi trackers and corresponding Wi-Fi probe request signal strengths;
associating a plurality of probe requests detected within a predefined time window; and
determining by triangulation a location of a Wi-Fi enabled device using the Wi-Fi probe request signal strengths of the associated probe requests.

The method may further comprise making a plurality of determinations of the location of the Wi-Fi enabled device (using the same combination of temporal coincidence detection and triangulation) and determining a path of the Wi-Fi enabled device therefrom.

The method may further comprise responding to the rate of probe request detection by dynamically modifying the size of the time window, including setting a smaller time window when the rate of probe request detection is higher and setting a larger time window when the rate of probe request detection is lower. Generally, this would be done with a predefined minimum window and a predefined maximum window.

The presented content may comprise visual content and/or audio content.

According to a second aspect, the invention provides a system for real-time audience characterisation, the system comprising:
an event detector configured to automatically detecting one or more events associated with and arising from an audience members or potential audience members in a proximity of a presentation device configured to present content (such as advertising, entertainment, news and/or infotainment, and may be-for example-visual content and/or audio content);
an event counter configured to record or count the events in anonymous form;
a controller (which may include the event detector) configured to generate one or more characteristics of the audience or potential audience of the presented content by processing the events or the number thereof according to empirical data pertaining to the one or more characteristics of the audience or potential audience; and
an output configured to output the one or more characteristics of the audience or potential audience.

In an embodiment, the one or more characteristics comprise:
i) a size of the audience or potential audience;
ii) sex of the audience or potential audience;
iii) age of the audience or potential audience;
iv) household size of the audience or potential audience;
v) income of the audience or potential audience; and/or
vi) product interests of the audience or potential audience.

In an embodiment, the system comprises a wireless access point (WAP) configured to detect Wi-Fi probe requests from Wi-Fi enabled devices in the vicinity of the presentation device. The WAP may be configured not to record or read-out content of the probe requests. For example, the WAP may comprise a kernel configured to control the WAP not to record or read-out content of the probe requests. The kernel may be configured to prompt the generation of a random or pseudo-random number or string in response to detection of a probe request.

In an embodiment, the empirical data includes data that correlates a number of probe requests with a size of the audience or potential audience (that is, the characteristic comprises the number of audience or potential audience) in the proximity of the presentation device.

In an embodiment, the system comprises a facetracking system configured to detect faces in the vicinity of the presentation device.

In another embodiment, the system includes or employs one or more Bluetooth (trade mark) beacons installed in the vicinity of the advertising panel, and detection software (or app) configured to detect Bluetooth beacon signals and installed on smartphones of the audience members or potential audience members, wherein the detection software is configured to respond to the Bluetooth beacons by transmitting an ID from the Bluetooth beacon signal to the system, thereby alerting the system of the proximity of the smartphone.

In an embodiment, the system further comprises a content scheduler configured to control presentation of the content by the presentation device. In an example, the system is configured to control the content scheduler according to the one or more characteristic of the audience or potential audience.

In an embodiment, the system further comprises a triangulator configured
i) to associate a plurality of Wi-Fi probe requests with corresponding Wi-Fi probe request signal strengths detected within a predefined time window from respective wireless access points or Wi-Fi trackers, the Wi-Fi probe requests being issued by at least one Wi-Fi enabled device in the vicinity of the wireless access points or Wi-Fi trackers; and
ii) to determine by triangulation a location of a Wi-Fi enabled device using the Wi-Fi probe request signal strengths of the associated probe requests.

Thus, the triangulator is configured to monitor incoming probe requests for signals whose time-stamps are sufficiency close that the corresponding probe request detections may be regarded as likely to have arisen from a single probe request from a Wi-Fi enabled device.

The triangulator may be located as convenient, whether in a Wi-Fi router (located, for example, in association with the presentation device), in the controller or otherwise. Also, the triangulator may be distributed; for example, instead of the temporal coincidence detection and the triangulation being performed by a single component (such as in the controller), the temporal coincidence detection may be performed by a component of a Wi-Fi router and the triangulation may be performed by a component of the controller.

The triangulator may be further configured to make a plurality of determinations of the location of the Wi-Fi enabled device (using the same combination of temporal coincidence detection and triangulation) and to determine a path of the Wi-Fi enabled device therefrom.

According to a third aspect, the invention provides computer program code configured, when executed by one or more processors, to implement the method of the first aspect. This aspect also provides a computer-readable medium (which may be non-transitory), comprising such computer program code.

It should be noted that any of the various individual features of each of the above aspects of the invention, and any of the various individual features of the embodiments described herein including in the claims, can be combined as suitable and desired.

### Drawings

In order that the invention may be more clearly ascertained, embodiments will now be described by way of example with reference to the following drawing, in which:
Figure 1 is a schematic view of a system for real-time audience tracking, according to an embodiment of the present invention;
Figure 2 is a block diagram of the main components of the memory of the system of figure 1;
Figure 3 is a block diagram of the system controller and advertising panel of the system of figure 1;
Figures 4A and 4B are schematic plots illustrating the effect of the processing of the tracking data performed by the system controller of the system of figure 1;
Figure 5 is a flow diagram of the operation of the system of figure 1;
Figure 6 is a schematic view of a system for real-time audience tracking, according to another embodiment of the present invention; and
Figure 7 is a block diagram of the system controller and advertising panel of the system of figure 6.

### Detailed description

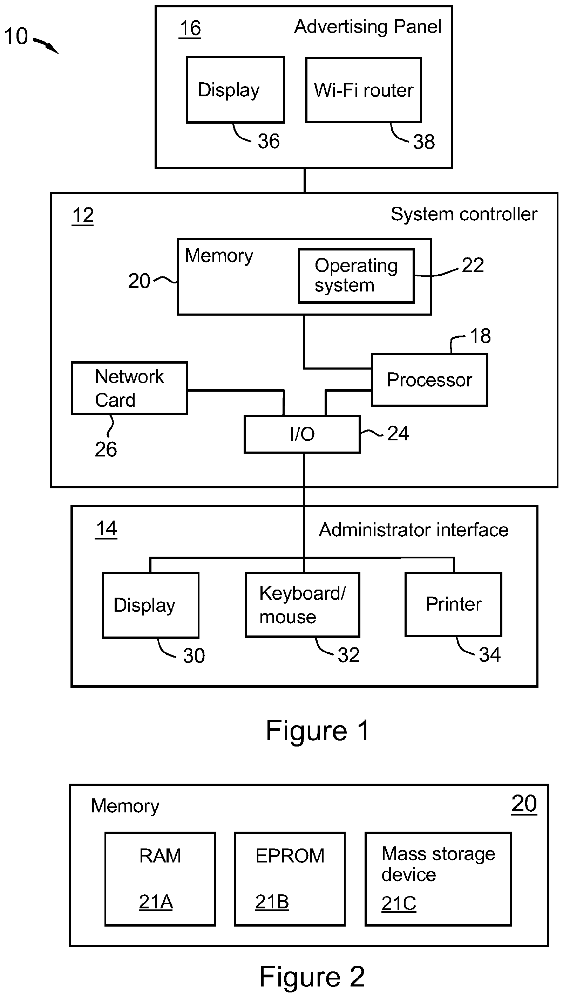

Figure 1 is a schematic view of a system 10 for real-time audience tracking (especially of predefined target groups) in an advertising environment, according to an embodiment of the present invention, in which only the more important operative components are shown for clarity. The following description of system 10 relates to its use in tracking one or more predefined audiences for advertising purposes, but system 10 is also suitable (with minor modification) for tracking predefined target groups for other purposes-such as to assess the use of public spaces or infrastructure (such as parks or playgrounds), in order to determine whether sufficient capacity is available.

System 10 includes a system controller 12, an administrator interface 14 and a presentation device in the form, in this embodiment, of an advertising panel 16. System controller 12 has a processor 18 and a memory 20. Instructions and data to control the operation of processor 18 are stored in memory 20, which is in data communication with processor 18. Typically, system 10 includes both volatile and non-volatile memory and more than one of each type of memory; however, such memories are collectively represented by memory 20 in the schematic representative of figure 1.

System controller 12 has an operating system 22 that is executable by processor 18, and an input/output (I/O) interface 24 for communicating with peripheral devices of system 10. The peripheral devices may be intelligent devices with their own memory for storing associated instructions and data for use with the input/output interface 22 or the peripheral devices.

In addition, system controller 12 includes a communications interface, in this example in the form of a network card 26. Network card 26 allows system controller 12 to communicate with advertising panel 16 via a suitable network (not shown), which may be an intranet, the internet, a cellular network or otherwise (or a combination of these). Network card 26 also allows system 10 to, for example, send tracking results or other information to a remote controller, server or database and receive data or commands from the central controller, server or database which, though not shown in this figure, may be a part of system 10.

Administrator interface 14 includes peripheral devices that communicate with system controller 12. These peripheral devices comprise one or more displays 30, a keyboard/mouse 32 and a printer 34.

Advertising panel 16 is configured to be located remotely from system controller 12, so that it can be deployed at a site deemed suitable for advertising to the desired, target groups. Advertising panel 16 includes one or more displays 36 for displaying advertising content, and a wireless access point (WAP) in the form of a Wi-Fi router 38. Display 36 may be digital, as it is in this embodiment, but it need not be-the display 36 (or one of displays 36) may comprise a board for supporting a poster, such as a scrollable poster. Advertising panel 16 may also include a speaker or speakers (not shown) for outputting audio advertising content. In addition, Wi-Fi router 38 need not be physically housed within advertising panel 16: it may instead be located nearby, such as to monitor a specific volume of the environment from which people may view the advertising material presented or displayed by advertising panel 16. Indeed, in some variations of this embodiment, it may be regarded as a part of system 10 but not of advertising panel 16, while communicating with system controller 12 via advertising panel 16 or via a cellular network.

Although only one advertising panel 16 is depicted, it should also be understood that system 10 would typically include a plurality of identical or comparable advertising panels 16. The advertising content outputted by advertising panel 16 may be stored locally (i.e. in advertising panel 16), or in memory 20.

In an alternative embodiment, system 10 includes software products executable on personal computing devices, portable computing devices (such as tablet computers or smartphones) or the like. These software products are operable by users to allow users to enter information remotely, and submit information to or access information from system controller 12, and hence allow such computing devices to function at least to some extent as user interfaces. This information typically comprises advertising content (for outputting by advertising panel 16) and/or advertising scheduling information usable by system 10 to control advertising panel 16 to output specific content according to a specified schedule.

Furthermore, it should be noted that system 10 may be distributed, and that additional hardware may be included as a part of system 10, or hardware may be omitted as required for the specific implementation.

Figure 2 is a block diagram of the main components of memory 20. Memory 20 includes RAM 21A, EPROM 21B and a mass storage device 21C. RAM 21A typically temporarily holds program files for execution by the processor 18 and related data. EPROM 21B may be a boot ROM device and/or may contain some system or other code.

Mass storage device 21C is typically used to store advertising content, and software programs whose integrity may be verified and/or authenticated by processor 18 using protected code from EPROM 21B or elsewhere, as well as at least some of the basic data used as the input to those software programs. Mass storage device 21C may also be used to store tracking data (as described below); the tracking data-in raw or processed form-may also be displayed (such as on display 30) and/or transmitted by system 10 to a user on another (e.g. remote) device.

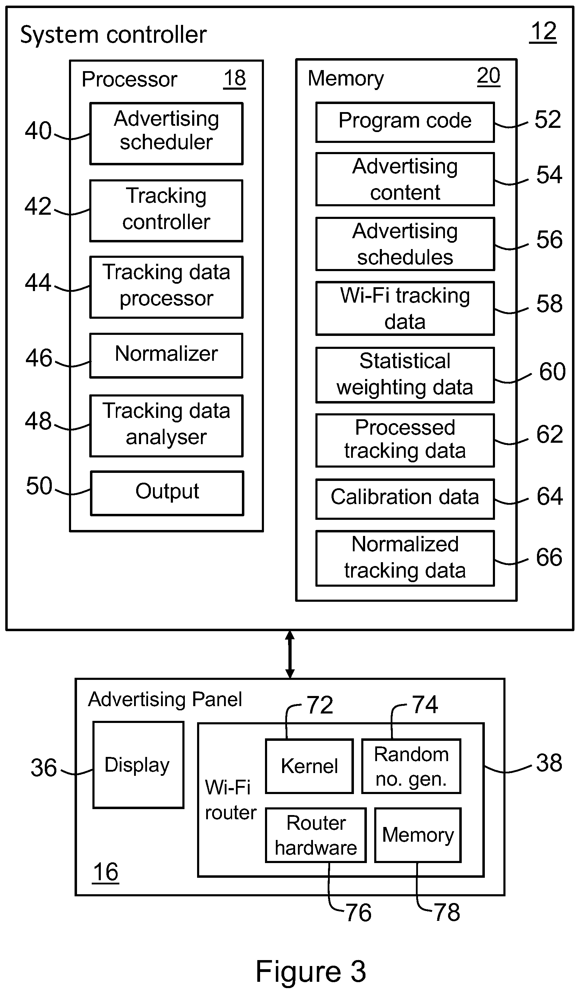

Figure 3 is a block diagram of system controller 12 and advertising panel 16, showing processor 18 and memory 20, including the main components of processor 18. System controller 12 is, in this embodiment, implemented as a data management platform (DMP) comprising a high-performance server and database. The main components of processor 18 are adapted to implement various user commands (entered via user interface 16) and programmed functions (embodied as program code), in order-for example-to control the outputting of advertising content by advertising panel 16, and the collection and processing of that tracking data.

Thus, processor 18 includes an advertising scheduler 40, an event counter in the form of a tracking controller 42, a tracking data processor 44, a normalizer 46, tracking data analyser 48, and an output 50. Memory 20 includes program code 60 (which, when executed, implements the operations described below), advertising content 54, advertising schedules 56, Wi-Fi tracking data 58, statistical weighting data 60, processed tracking data 62, calibration data 64, and normalized tracking data 66.

Advertising scheduler 40 is configured to control the timing of the presentation of advertising content 54 according to advertising schedules 56. It will be appreciated, however, that-as is the case with many components of system 10, which may be distributed-advertising content 54 and advertising schedules 56 may be located remotely. Also, as is described below, advertising scheduler 40 is configured so that it can be controlled on the additional basis of normalized tracking data 66.

It should also be noted that advertising content 54 may not be stored in system controller 12. Instead, system 10 may include a playout system (typically in the form of a PC), generally located near or within advertising display 16 and connected via the internet (such as over a cellular network) to system controller 12. However, this playout system may alternatively be located remote from advertising panel 16 and be configured to stream (e.g. advertising) content to advertising panel 16. In these arrangements, the playout PC receives the information as to which content to play from advertising scheduler 40.

In a variation of that arrangement, the playout system-rather than system controller 12-includes an advertising scheduler, such that system 10 is distributed. In a still further variation, the content is provided by such a playout system, but that playout system is merely controlled by the advertising scheduler (whether a part of the playout system or of system controller 12): the playout system does not form a part of system 10.

Tracking controller 42 is configured to mediate the receipt of tracking data from advertising panel 16, including to store that data, time-stamped according to time of receipt, in Wi-Fi tracking data 58. (The time-stamping may be performed in any convenient manner, whether by Wi-Fi router 38, tracking controller 42, Wi-Fi tracking data 58 or otherwise.) The tracking data comprise random or pseudo-random numbers, each issued by advertising panel 16 in response to the detection by Wi-Fi router 38 of a probe request from a user's Wi-Fi enabled device. Alternatively, the tracking events may comprise a simple ping generated each time a user Wi-Fi device probes Wi-Fi router 38, or a numerical tally of the number of times Wi-Fi router 38 detects a probe request from a user Wi-Fi enabled device over a pre-set accounting period. (It should be noted that, generally, a plurality of probe requests will be detected by Wi-Fi router 38 from a particular user Wi-Fi enabled device while that user is in the vicinity of Wi-Fi router 38.)

Tracking data processor 44 is configured to process this tracking data using statistical weighting data 60. Statistical weighting data 60 are data, typically collected empirically (such as by a market research company), that indicate the ratio of the actual number of people in the advertising content viewing area or zone, and the number of probe requests from people in the advertising content viewing area or zone with active Wi-Fi enabled devices. This allows system 10 to apply a correction for those in the advertising audience without a Wi-Fi enabled device, those with more than one Wi-Fi enabled device, and-generally most significantly-those from whose devices Wi-Fi router 38 detects a plurality of probe requests. Statistical weighting data 60 is also, in this embodiment, time-dependent. For example, times of the day in which elderly people are present in higher numbers may give rise to proportionally lower numbers of Wi-Fi enabled devices, owing to the lower penetration of Wi-Fi enabled devices in that demographic. Hence, a greater weighting would be given to the detected number of Wi-Fi enabled devices in those times. Likewise, for any particular time window (e.g. 09:00 to 09:30), certain days of the week may have advertising audiences with either a higher or lower numbers of Wi-Fi enabled devices than others; statistical weighting data 60 can also include weighting for that effect-as well as for further variations in specific days (e.g. religious holidays, public/bank holidays, days with high-profile sporting events, etc).

In use, tracking data processor 44 modifies (such as by division) each detected number of probe requests from Wi-Fi enabled devices according to the appropriate entry or entries in statistical weighting data 60-including interpolating between entries if necessary. Tracking data processor 44 then outputs the result, in the form of processed tracking data, to processed tracking data 62. The processed tracking data thus indicates the real number of advertising audience members likely to have viewed or otherwise been exposed to the advertising.

Normalizer 46 is configured to normalize the processed tracking data according to calibration data 64. The calibration data comprises survey data collected in the vicinity of advertising panel 16 (again, such as by a market research company), comprising anonymous information (i.e. demographic information without identifying personal references) concerning visitors to the location of the advertising panel 16. As with statistical weighting data 60, calibration data 64 is collected at different times of the days, days of the week, etc., and includes as much demographic information concerning the expected advertising audience as can feasibly or economically be collected. For example, calibration data 64-in this embodiment-includes:
- the proportion of male visitors aged 30 to 50 in Shell (trade mark) petrol stations on Tuesday mornings between 09:00 and 10:00;
- the proportion of female visitors aged 20 to 30 in shopping centres on Tuesday afternoons between 15:00 and 16:00;
- the proportion of heads of household aged 20 to 30 in EDEKA (trade mark) supermarkets on Wednesday afternoons between 13:00 and 16:00;
- the proportion of people with a household net income between €4,000 and €5,000 per month in airports (or in a specified airport) on Thursday evenings between 18:00 and 20:00.

In this embodiment, calibration data 64 also includes all relevant variations of these examples, by sex, time window, day of the week, household income bracket, etc. For example, if an advertising panel 16 were to be erected in a Mobil (trade mark) petrol station, calibration data 64 would include demographic information pertaining to Mobil petrol stations in the applicable region, if not from the specific petrol region.

Normalizer 46 thus normalizes processed tracking data 62 according to calibration data 64 (though it could also be described as normalizing calibration data 64 according to processed tracking data 62). Processed tracking data 62 is dynamic, being collected in real- or near-real-time, whereas calibration data 64 is essentially static (though subject to periodic updating); the resulting output of normalizer 46 comprises normalized tracking data and is stored in normalized tracking data 66 or output via output 50 (such as to display 30 or via network card 26 to another computing device).

For example, market research may reveal that typically, at a particular shopping centre of interest:
- there are 100 visitors in a specified time window, 60% of which are female and 40% male;
- 70% of these (both male and female) carry a smartphone;
- 90% of the carried smartphones (of both male and female visitors) have the Wi-Fi function enabled.

In this scenario, Wi-Fi tracking data 58 records 1000 Wi-Fi probe requests in that timeframe, so yields statistical weighting data of 0.1 (i.e. one visitor per 10 probe requests), which can be used from that point on as statistical weighting data 60. This survey also yields calibration data of 60% female and 40% male.

(It should be noted that the statistical weighting of the Wi-Fi tracking data 58 and the subsequent normalization according to calibration data 64 may be combined. In the above example, the statistical weighting data and calibration data may be combined, such that in the same time window on future occasions, normalized tracking data 66 can be determined on the basis of 6 female advertising audience members for every 100 detected probe requests, and 4 male advertising audience members for every 100 detected probe requests.)

Thus, by-in effect-merging the two data sets (the processed tracking data 62 and the calibration or survey data 64) and thereby generating the normalized tracking data 66, system 10 can generate credible, real-time information on the visitors and hence advertising audience at the locations of advertising panel 16. This information can be used in at least three valuable ways.

For example, advertising scheduler 40 can be controlled on the additional basis of normalized tracking data 66. That is, the advertising content 54 selected by advertising scheduler 40 to be outputted by advertising panel 16 can be varied according to normalized tracking data 66. Tracking data analyser 48 is configured to perform this function: it inputs normalized tracking data 66 and, if-for example-it detects a spike to audience numbers at a time found to be male dominated, may instruct advertising scheduler 40 to adjust the ratio of male- to female-targeted advertising content accordingly (such as by increasing in real-time the proportion of male-targeted advertising). This amounts to the targeted playout of advertising or generalized content on, in this example, digital out of home media.

Secondly, tracking data analyser 48 can be used to analyse variations in normalized tracking data 66 as a function of changes in the outputted advertising content 54, by correlating the time of significant variations in audience numbers with the time of changes in outputted advertising content 54. Thus, the performance (e.g. reach, target groups) of the advertising media in the out-of-home space can be gauged. The results of tracking data analyser 48 can be outputted for human inspection, and/or inputted into advertising scheduler 40, such as to control advertising scheduler 40 to favour the outputting of content that produces the largest audience (or audience with desired demographic characteristics).

Thirdly, normalized tracking data 66 provides a measure of visitors numbers and flows, which may be used to-for example-more accurately or objectively calculate rents in shopping centres or for supply management in restaurants or retail outlets, such as airports and motorway service areas.

Importantly, in the collection by tracking controller 42 of the tracking data from advertising panel 16, personal data is not collected, so it is not necessary to inform visitors (i.e. potential advertising audience members) about the collection of data or to give those visitors the opportunity to object to that collection. This is implemented as follows.

Wi-Fi router 38 includes, in particular, a kernel 72, a random number generator 74, router hardware 76 and memory 78. Wi-Fi router 38 is configured to facilitate the counting of Wi-Fi enabled devices in the vicinity (e.g. within a radius of approximately 10 m) of Wi-Fi router 38 at any given time, without recording personalized data.

Kernel 72 controls the router hardware 76 of Wi-Fi router 38, and specifically all communication between the software of Wi-Fi router 38 and the router hardware 76. In this embodiment, kernel 72 is configured such that, when Wi-Fi router 38 registers that a probe request has been made by a Wi-Fi enabled device, the content of the probe request is neither recorded nor read out by Wi-Fi router 38; it is not stored in Wi-Fi router 38 and is not accessible at any time by other components of system 10.

Detecting a probe request triggers the generation by random number generator 74 of a random or pseudo-random number or string, which is then used for counting the number of received probe requests. In time, memory 78 of Wi-Fi router 38 will contain a series of randomly or pseudo-randomly generated numbers or strings, each of which represents a measured probe request, but not its contents. Kernel of Wi-Fi router 38 has this built-in randomization, so Wi-Fi router 38 cannot read the contents of the probe requests or pass them on to the software services in Wi-Fi router 38 or system controller 12. Only these random strings are passed on for further processing, including counting the strings and/or transmitting them (or a tally thereof) to system controller 12.

Thus, Wi-Fi router 38 cannot discern whether a probe request comes from a smartphone or other device from which it has previously detected probe requests (i.e. of a returning visitor) or from a new smartphone.

Data protection provisions therefore do not apply, as no personal data-whether in the form of MAC address, a list of previous SSIDs or even signal strength-is collected. Only the information that a probe request has been made is collected, without the collection of the content of the probe request: the content of the probe request is neither recorded nor read out or stored in Wi-Fi router 38.

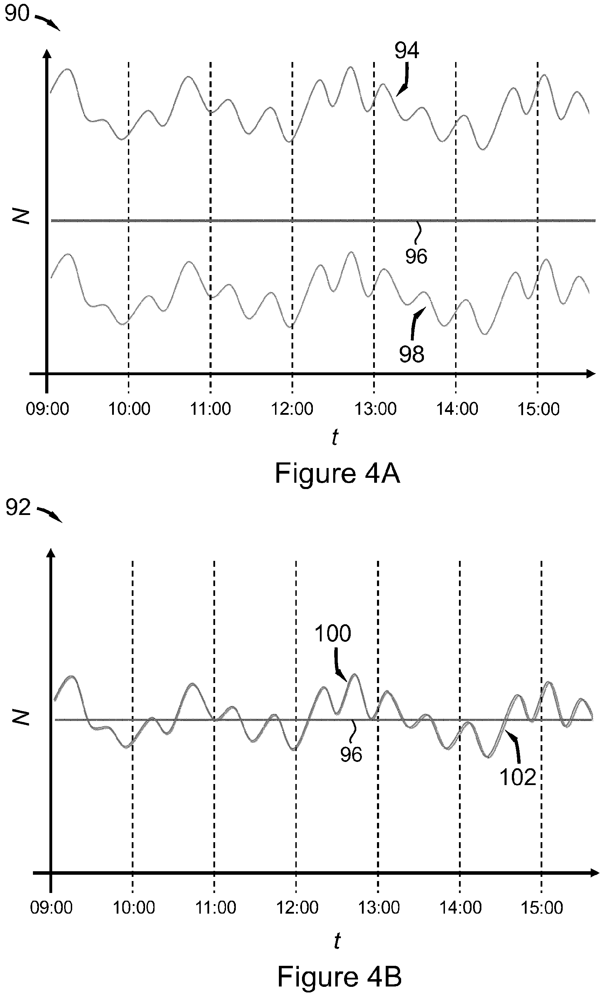

Figures 4A and 4B are schematic plots 90, 92 respectively, illustrating the effect of the processing of the tracking data performed by system controller 12. Schematic or notional plots 90, 92 illustrate the apparent size of the advertising audience N (normalized against the true size of the audience) versus time of day t.

Plot 90 of figure 4A has three curves: Wi-Fi probe request curve 94, survey data curve 96 and facetracking curve 98 (discussed further below). Survey data curve 96 is a horizontal line, because it represents the empirically obtained true size of the advertising audience, normalized against itself.

Wi-Fi probe request curve 94 (which is essentially a notional plot of number of the number of detected Wi-Fi probe requests normalized against the survey data) varies, because it is affected by largely random factors (such as how many Wi-Fi enabled devices are in the vicinity of advertising panel 16, and how many are switched on) and is also too high, because many probe requests may be received from a single Wi-Fi enabled device.

Plot 92 of figure 4B illustrates the effect of the processing of the data by system controller 12 by reference to statistical weighting data 60 and calibration data 64. Hence, curve 100 of figure 4B represents the normalized tracking data 66 (normalized against the survey data). It will be seen that the long-term average of normalized tracking data 66 corresponds to the survey data values. Curve 100 still includes departures from the survey data, owing to the random factors referred to above, but provides a credible estimate of the true size of the advertising audience.

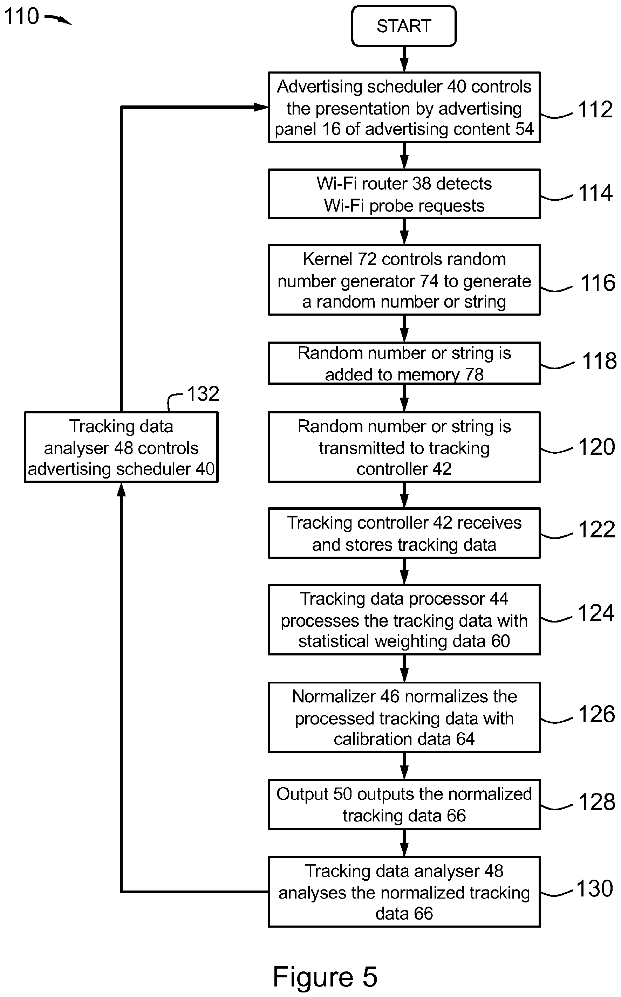

Figure 5 is a flow diagram 110 of the operation of system 10. (It will be appreciated that, in practice, system 10 operates essentially continuously.)

At step 112, advertising scheduler 40 controls the presentation by advertising panel 16 of advertising content 54. At step 114, Wi-Fi router 38 detects probe requests and, at step 116, kernel 72 of Wi-Fi router 38 responds by controlling random number generator 74 to generate a random or pseudo-random number or string.

At step 118, the random number or string is added to memory 78 of Wi-Fi router 38 and, at step 120, is transmitted to tracking controller 42. The transmission of the random number or string to tracking controller 42 may be performed either in conjunction with the generation of the random number or string or periodically with all other random numbers or strings generated and stored to memory 78 since the last time that they were transmitted to tracking controller 42. In the latter example, this is done at the end of each accounting/survey period (e.g. each 30 or 60 min). Alternatively, a simple count of the number of random numbers or strings may be sent to tracking controller 42, either indicating that another random number or string has been generated, or that a probe request has been detected, or that a particular number of events are reflected by the data stored to memory 78.

At step 122, tracking controller 42 receives the tracking data and stores it, time-stamped, in Wi-Fi tracking data 58. At step 124, tracking data processor 44 processes the tracking data using statistical weighting data 60, and at step 126 normalizer 46 normalizes the processed tracking data according to calibration data 64 and stores the results in normalized tracking data 66. At step 128, output 50 outputs the normalized tracking data 66.

Optionally, at step 130 (which occurs in parallel with step 128), tracking data analyser 48 inputs and analyses the normalized tracking data 66 and, at step 132, controls advertising scheduler 40 according to that analysis.

It will be understood to persons skilled in the art of the invention that many modifications may be made without departing from the scope of the invention, in particular it will be apparent that certain features of embodiments of the invention, and alternative techniques as would be apparent to the skilled person, can be employed to form further embodiments.

For example, the embodiment of figure 1 employs Wi-Fi router with a modified kernel configured to prompt the generation of a random number, but not to record or read out the content of a probe request. In an alternative embodiment, a facetracking system is used instead of a Wi-Fi router for the detection of the advertising audience, wherein the facetracking system does not record in any way a detected image of a face. Rather, the facetracking system merely records or registers instances of identifying the occurrence of a face in its field of view, but not the face itself. As in the embodiment of figure 1, the output of the facetracking system (whether in the form of random numbers or strings, a counter indicating the number of face detected, or otherwise) is processed by a system controller comparable in most respects to that of system 10. Hence, the output of the facetracking system is similarly processed based on statistical weighting data and normalized according to calibration data. Unlike system 10, it is expected that the statistical weighting data will tend to increase the unprocessed output of the facetracking system, as facetracking systems commonly miss faces (owing to limited fields of view and the posture of the person) so underestimate the number of people in the vicinity.

Figure 4A represents this effect schematically. Facetracking curve 98 is lower than survey data curve 96 and especially Wi-Fi probe request curve 94, owing to the limitations of the facetracking system. Multiple counts of a single individual are also less likely with the facetracking system than with system 10, because a single individual may be tracked as he or she passes through the zone monitored by the facetracking system (typically in front of an advertising panel), so be outputted as a single event. This may be contrasted with the multiple probe requests that system 10 is likely to detect from that person's smartphone during the same transit.

Referring to figure 4B, however, it will be seen that-once the output of the facetracking system has been processed based on the statistical weighting data and the calibration data-a normalized tracking data curve 102 is generated that also has a long-term average that corresponds to survey data values.

In yet another alternative, the system employs one or more Bluetooth (trade mark) beacons installed in the vicinity of the advertising panel, and detection software (or app) configured to detect Bluetooth beacon signals and installed on smartphones of audience members or potential audience members. The detection software responds to the Bluetooth (trade mark) beacons by transmitting an ID from the Bluetooth beacon signal to the system, thereby alerting the system of the proximity of the smartphone. In other respects the system operates similarly to system 10 or to the facetracking embodiment.

In a further embodiment, the system receives signals from a plurality of (and advantageously at least three) Wi-Fi trackers (also referred to as Wi-Fi scanners) arranged about a monitored area or site, whenever the Wi-Fi trackers detect Wi-Fi probe requests from Wi-Fi enabled devices in their vicinity. Optionally, the system of this embodiment may include that plurality of Wi-Fi trackers.

The system of this embodiment then uses temporal coincidence detection (between probe request detections) and triangulation (based on the positions of the detecting Wi-Fi trackers and the probe request signal strengths) to determine the position of Wi-Fi enabled devices, from which an audience map may be generated. The audience map records the distribution and, in some cases, the movement of one or more of the audience or potential audience members with Wi-Fi enabled devices.

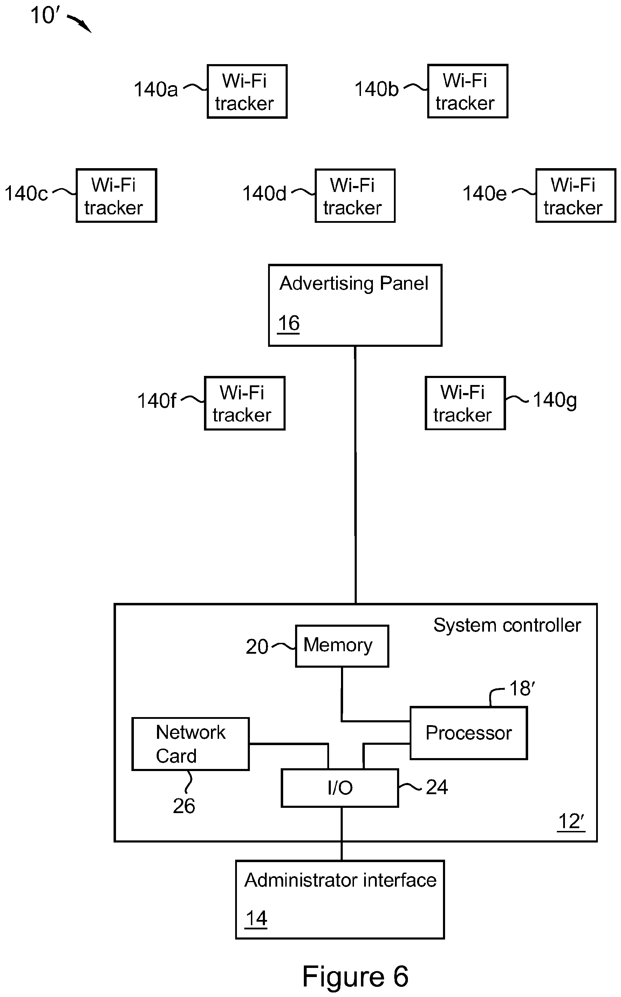

Thus, figure 6 is a schematic view of a system 10' for real-time audience tracking in an advertising environment, according to an embodiment of the present invention. System 10' is in many respects identical with system 10 of figure 1, and like reference numerals have been used to identify like features. Some features of system 10' are shown in even more simplified form than those of system 10 of figure 1, but reference may be made to the description of system 10 of figure 1 to ascertain further detail about system 10'.

System 10' includes a system controller 12', an administrator interface 14 and a presentation device in the form of an advertising panel 16. System controller 12' has a processor 18' and a memory 20. Instructions and data to control the operation of processor 18' are stored in memory 20, which is in data communication with processor 18'. System 10' includes both volatile and non-volatile memory and more than one of each type of memory, collectively represented by memory 20.

System controller 12' has an operating system 22 that is executable by processor 18', and an input/output (I/O) interface 24 for communicating with peripheral devices of system 10'. System controller 12' also includes a communications interface in the form of a network card 26 that allows system controller 12' to communicate with advertising panel 16 via a suitable network (not shown), which may be an intranet, the internet, a cellular network or otherwise (or a combination of these). Network card 26 also allows system 10' to, for example, send tracking results or other information to a remote controller, server or database and receive data or commands from the central controller, server or database which, though not shown in this figure, may be a part of system 10'.

Administrator interface 14 includes peripheral devices that communicate with system controller 12'. These peripheral devices comprise one or more displays 30, a keyboard/mouse 32 and a printer 34.

System 10' also includes a plurality of Wi-Fi trackers 140a-140g. As illustrated, this embodiment includes seven such Wi-Fi trackers , but it should be understood that any plurality (within practical limits, including in processing capacity and bandwidth) may be employed. Advantageously, system 10' should include at least three such Wi-Fi trackers.

Wi-Fi trackers 140a-140g are distributed, in use, in the proximity of advertising panel 16, as they facilitate the determination of the behaviour of the audience or potential audience of the content outputted by advertising panel 16. This is not to suggest that Wi-Fi trackers 140a-140g must be located only in a zone from which that content can be, for example, heard or seen by that audience or potential audience. For example, at least some of Wi-Fi trackers 140a-140g could be located at entrances that provide access to that zone (such as near shopping centre entries), so that a more comprehensive assessment of audience behaviour or flow can be determined.

Wi-Fi trackers 140a-140g are in data communication with Wi-Fi router 38 of advertising panel 16. Wi-Fi trackers 140a-140g are arranged to detect Wi-Fi probe requests from Wi-Fi enabled devices in their vicinity, and to send signals indicative of those probe requests including the strength of the probe requests to Wi-Fi router 38. As in system 10 of figure 1, the detection of a probe request (in this instance by any of Wi-Fi trackers 140a-140g) and its communication to Wi-Fi router 38 triggers the generation by random number generator 74 of a random or pseudo-random number or string. These random or pseudo-random numbers or strings are transmitted to system controller 12', in each case accompanied by data indicative of the strength (or dampening) of the respective probe request. At system controller 12', tracking controller 42 stores that data, time-stamped according to time of receipt and with the signal strength data, in Wi-Fi tracking data 58.

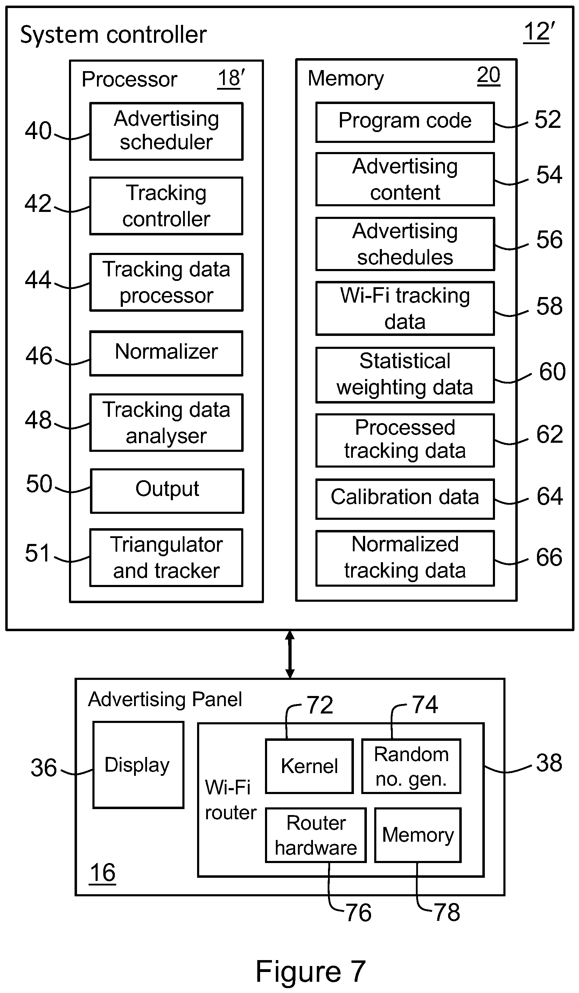

Figure 7 is a block diagram of system controller 12' and advertising panel 16 of system 12'. Processor 18' of system controller 12' is comparable to processor 18 of system 10, but additionally includes a triangulator and tracker 51. Triangulator and tracker 51 is configured to monitor the incoming probe request data received from Wi-Fi router 38 for signals whose time-stamps are sufficiency close that the corresponding probe request detections may be regarded as likely to arise from a single probe request from a Wi-Fi enabled device.

Smartphones are a very common example of a Wi-Fi enabled device likely to be carried in many environments by a majority of adult audience or potential audience members. Smartphones typically send out probe requests every 1 to 5 minutes, so it is unlikely that two different smartphones in the area monitored by Wi-Fi trackers 140a-140gwill send out probe requests at the same time (to within, say, 0.1 s of each other). Triangulator and tracker 51 includes a predefined but controllable time window that, in this embodiment, is 0.1 s; within this window probe requests detections are treated by triangulator and tracker 51 as arising from a single probe request from a single Wi-Fi enabled device.

The probability of two smartphones transmitting a probe request within 0.1 s of each other rises with the number of smartphones in the monitored area. However, for that to become a significant problem, it is estimated that there would need to be at least 1500 smartphones in the monitored area (assuming the average time between two probe requests from an individual smartphone is 150 s). For most monitored areas (e.g. points of sale) this is far above the likely number of smartphones in the vicinity at any time.

Should this appear to be a problem or a likely problem, the area monitored by each of Wi-Fi trackers 140a-140g can be decreased, such as by installing more Wi-Fi trackers 140a-140g with closer spacing and thereby increasing the number of individually monitored areas. Another way to counter the problem is to ensure that more precise time-stamps are associated with the detected probe requests, whether by employing components with a higher clock rate, assigning more precise time-stamps, or otherwise. For example, if each Wi-Fi tracker can distinguish between probe requests as close as 0.01 s apart, instead of as close as 0.1 s apart, the number of smartphones that can be differentiated rises by a factor of approximately 10. However, too small a value for this time window increases the risk that plural probe request detections arising from a single probe request will be treated as being from different devices (owing, for example, to small differences between Wi-Fi trackers 140a-140g or system latency).

In an embodiment, the tracking controller is configured to respond to the rate of probe request detection by dynamically modifying the size of this time window, so as to balance these considerations, setting a smaller time window when the rate of probe request detection is higher and setting a larger time window when the rate of probe request detection is lower (though with a predefined minimum window and a predefined maximum window).

Should, however, two different Wi-Fi enabled devices send probe requests so close in time as to be given the same time-stamp to within the ability of system 10' to distinguish them, system 10' will be unable to determine their positions within the monitored area. However, such a situation will generally affect only that single instance; the next probe requests issued by the two devices may be expected generally not to coincide, owing to the variation in the frequency with which probe requests are issued between Wi-Fi enabled devices.

Thus, without employing the MAC address or the hash value of the MAC address contained in the probe requests, system 10' can nonetheless determine when two or more probe request detections are likely to have arisen from a single probe request from a single Wi-Fi enabled device.

Triangulator and tracker 51 then determines the location of that Wi-Fi enabled device at the time it issued that probe request, from the set of probe request detections determined to be likely to have arisen from a single probe request from a particular Wi-Fi enabled device. Triangulator and tracker 51 is configured to make this determination based on the respective Wi-Fi probe request signal strengths of each probe request detection, as each signal strength implies a respective relative distance from those of Wi-Fi trackers 140a-140g that detected the probe request within the time window. (Note that only a subset of Wi-Fi trackers 140a-140g may detect a particular probe request, and position determination will be made by triangulator and tracker 51 only when sufficient detections have been made.) This determination generally becomes more accurate the greater the number of detections of the probe request, and at least three detections is generally the minimum number that will yield a worthwhile result. It should be borne in mind, however, that-even if a specific probe request is detected only twice (or even once) on one occasion-earlier or later probe requests from the same device may be detected a greater number of times, as the audience member (or potential audience member) moves around the monitored area. Hence, triangulator and tracker 51 can be configured to ignore instances of plural detection below what is found (by theory or empirically) to be insufficient.

Triangulator and tracker 51 is also configured to monitor the movement of the audience members or potential audience members. The positions of Wi-Fi enabled devices as determined by triangulator and tracker 51 are anonymous, but in many settings it can reasonably be assumed that the audience members are moving at no greater than a typical walking speed along a relatively smooth path, or are stationary. With these assumptions and in an uncrowded environment, the motion of a particular Wi-Fi enabled devices will be evident to the naked-eye from a map or display of the evolving positions of all detected Wi-Fi enabled devices. Thus, triangulator and tracker 51 is controllable to generate a map of the instantaneous evolving positions of all detected Wi-Fi enabled devices, and save it or display it display it (such as on a display of administrator interface 14), and/or transmit it to another computing device for storage or display. In addition, triangulator and tracker 51 is configured to generate a map of the resulting path taken by one or more Wi-Fi enabled devices when these can be ascertained unambiguously (or to with a reasonable degree of confidence) from the evolving position data.

Thus, using temporal coincidence detection and triangulation, system 10' can in suitable environments locate Wi-Fi enabled devices (such as smartphones) in a monitored area without the need to record the MAC addresses or any other personal data of those devices. In some environments, it is also able to identify the path of an individual Wi-Fi enabled device through the monitored area, subject to the accuracy of the position determination and constraints described above. The resulting position in particular can be used to generate maps of audience (or potential audience) density.

It will be appreciated that, in this embodiment, Wi-Fi trackers 140a-140g can make unnecessary the detection of probe requests by Wi-Fi router 38, but in practice it may be desirable to use Wi-Fi router 38 as, in effect, one of Wi-Fi trackers 140a-140g.

It will also be appreciated that essentially the same technique can be implemented using Bluetooth technology (or supplemented with Bluetooth technology), such as by employing a plurality of Bluetooth beacons installed in the vicinity of advertising panel 16, and detection software configured to detect Bluetooth beacon signals and installed on the Bluetooth enabled devices of audience members or potential audience members. The detection software responds to the Bluetooth beacons by transmitting an ID from the Bluetooth beacon signal to the system, including the strength of the Bluetooth beacon signal, each of which is time-stamped and employed by be used a triangulator and tracker to determine the position of the Bluetooth enabled devices.

It is to be understood that, if any prior art is referred to herein, such reference does not constitute an admission that the prior art forms a part of the common general knowledge in the art in any country.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A computer-implemented method for real-time audience characterisation, the method comprising:
automatically detecting one or more events associated with and arising from audience members or potential audience members in a proximity of a presentation device configured to present content;
recording or counting the events in anonymous form;
generating one or more characteristics of an audience or potential audience of the presented content by processing the events or the number thereof according to empirical data pertaining to the one or more characteristics of the audience or potential audience; and
outputting the one or more characteristics of the audience or potential audience.

2. A method as claimed in claim 1, wherein the one or more characteristics comprise:
i) a size of the audience or potential audience;
ii) sex of the audience or potential audience;
iii) age of the audience or potential audience;
iv) household size of the audience or potential audience;
v) income of the audience or potential audience; and/or
vi) product interests of the audience or potential audience.

3. A method as claimed in either claim 1 or 2, wherein automatically detecting the one or more events comprises detecting with a wireless access point Wi-Fi probe requests from Wi-Fi enabled devices in the vicinity of the presentation device.

4. A method as claimed in claim 3, wherein the wireless access point comprises a kernel configured to:
(i) control the wireless access point not to record or read-out content of the probe requests; and/or
(ii) prompt the generation of a random or pseudo-random number or string in response to detection of a probe request.

5. A method as claimed in either claim 3 or 4, wherein the empirical data includes data that correlates a number of probe requests with a size of the audience or potential audience of the presented content.

6. A method as claimed in any one of the preceding claims, wherein automatically detecting the one or more events
(i) comprises detecting faces in the vicinity of the presentation device with a facetracking system; and/or
(ii) comprises employing one or more Bluetooth beacons installed in the vicinity of the presentation device, and detection software configured to detect Bluetooth beacon signals and installed on smartphones of audience members or potential audience members, whereby the detection software responds to the Bluetooth beacons by transmitting an ID from the Bluetooth beacon signal to the system, thereby alerting the system of the proximity of the smartphone.

7. A method as claimed in any one of the preceding claims, wherein automatically detecting the one or more events comprises detecting faces in the vicinity of the presentation device with a facetracking system, and the empirical data includes data that correlates a number of recognized faces with a size of the audience or potential audience of the presented content.

8. A method as claimed in any one of the preceding claims, further comprising:
detecting a plurality of events with a plurality of wireless access points or Wi-Fi trackers, the events comprising Wi-Fi probe requests from at least one Wi-Fi enabled device in the vicinity of the wireless access points or Wi-Fi trackers and corresponding Wi-Fi probe request signal strengths;
associating a plurality of probe requests detected within a predefined time window; and
determining by triangulation a location of a Wi-Fi enabled device using the Wi-Fi probe request signal strengths of the associated probe requests.

9. A method as claimed in claim 8, further comprising making a plurality of determinations of the location of the Wi-Fi enabled device and determining a path of the Wi-Fi enabled device therefrom.

10. A system for real-time audience characterisation, the system comprising:
an event detector configured to automatically detecting one or more events associated with and arising from audience members or potential audience members in a proximity of a presentation device configured to present content;
an event counter configured to record or count the events in anonymous form;
a controller configured to generate one or more characteristics of the audience or potential audience of the presented content by processing the events or the number thereof according to empirical data pertaining to the one or more characteristics of the audience or potential audience; and
an output configured to output the one or more characteristics of the audience or potential audience.

11. A system as claimed in claim 10, wherein the one or more characteristics comprise:
i) a size of the audience or potential audience;
ii) sex of the audience or potential audience;
iii) age of the audience or potential audience;
iv) household size of the audience or potential audience;
v) income of the audience or potential audience; and/or
vi) product interests of the audience or potential audience.

12. A system as claimed in either claim 10 or 11, comprising a wireless access point configured to detect Wi-Fi probe requests from Wi-Fi enabled devices in the vicinity of the presentation device.

13. A system as claimed in claim 12, wherein the wireless access point comprises a kernel configured to:
(i) control the wireless access point not to record or read-out content of the probe requests; and/or
(ii) prompt the generation of a random or pseudo-random number or string in response to detection of a probe request.

14. A system as claimed in either claim 12 or 13, wherein the empirical data includes data that correlates a number of probe requests with a size of the audience or potential audience of the presented content.

15. A system as claimed in either claim 10 or 11, further comprising
(i) a facetracking system configured to detect faces in the vicinity of the presentation device; and/or
(ii) includes or is configured to employ one or more Bluetooth (trade mark) beacons installed in the vicinity of the presentation device, and detection software configured to detect Bluetooth beacon signals and installed on smartphones of audience members or potential audience members, wherein the detection software is configured to respond to the Bluetooth beacons by transmitting an ID from the Bluetooth beacon signal to the system, thereby alerting the system of the proximity of the smartphone.

16. A system as claimed in any one of claims 10 to 15, further comprising:
(i) a content scheduler configured to control presentation of the content by the presentation device; or
(ii) a content scheduler configured to control presentation of the content by the presentation device wherein the system is configured to control the content scheduler according to the one or more characteristics of the audience or potential audience.

17. A system as claimed in any one of claims 10 to 16, further comprising a triangulator configured
i) to associate a plurality of Wi-Fi probe requests with corresponding Wi-Fi probe request signal strengths detected within a predefined time window from respective wireless access points or Wi-Fi trackers, the Wi-Fi probe requests being issued by at least one Wi-Fi enabled device in the vicinity of the wireless access points or Wi-Fi trackers; and
ii) to determine by triangulation a location of a Wi-Fi enabled device using the Wi-Fi probe request signal strengths of the associated probe requests.

18. Computer program code configured, when executed by one or more processors, to implement the method of any one of claims 1 to 9.

19. A computer-readable medium, comprising the computer program code of claim 18.
